# EUROPÄISCHE PATENTSCHRIFT

(11) **EP 1 223 088 B1**
(45) Veröffentlichungstag und Bekanntmachung des Hinweises auf die Patenterteilung: **31.08.2005**
(21) Anmeldenummer: 02090007.2
(22) Anmeldetag: 10.01.2002
(51) Int. Cl.: B60R 22/44

(54) **Sicherheitsgurtvorrichtung**
Seat belt device
Dispositif de ceinture de sécurité

(30) Priorität: 11.01.2001 DE 10101047
(43) Veröffentlichungstag der Anmeldung: 17.07.2002
(73) Patentinhaber: TAKATA-PETRI (Ulm) GmbH, 89081 Ulm (DE)
(72) Erfinder: Maierhofer, Gunter, 10249 Berlin (DE); Wengert, Andreas, 73572 Heuchlingen (DE)
(74) Vertreter: Rummler, Felix

(56) Entgegenhaltungen:
- EP-A- 0 893 313
- DE-A- 10 001 840
- DE-A- 19 636 448
- PATENT ABSTRACTS OF JAPAN vol. 2000, no. 09, 13. Oktober 2000 (2000-10-13) -& JP 2000 177535 A (TAKATA CORP), 27. Juni 2000 (2000-06-27)

## Beschreibung

Die Erfindung betrifft eine Sicherheitsgurtvorrichtung für Kraftfahrzeuge mit einem Sicherheitsgurt, einem Gurtaufroller und einem Antrieb für den Aufroller.

Derartige Sicherheitsgurtvorrichtungen sind grundsätzlich bekannt. Mittels des Antriebs kann beispielsweise eine Gurtstrafffunktion realisiert werden, indem bei einem Unfall der Aufroller in Aufwickelrichtung angetrieben wird, um dafür zu sorgen, daß der Gurt rechtzeitig eng am Körper des jeweiligen Fahrzeuginsassen anliegt.

Die gattungsbildende DE 196 36 448 A offenbart eine Sicherheitsgurtvorrichtung für Kraftfahrzeuge mit:
- einem Sicherheitsgurt,
- einem Gurtaufroller,
- einem Antrieb für den Aufroller,
- einem Getriebe zwischen dem Antrieb und dem Aufroller, und
- einem Schalter, der mittels des Antriebs betätigbar ist,
wobei mit dem Schalter ausgehend von einem Freilaufmodus ein Komfortmodus mit in Abwickelrichtung angetriebenem Aufroller und ein anderer Straffermodus mit in Aufwickelrichtung angetriebenem Aufroller einstellbar sind.

Es ist eine Aufgabe der Erfindung, eine Sicherheitsgurtvorrichtung der eingangs genannten Art zu schaffen, die bei möglichst einfachem Aufbau sowie sicherer und zuverlässiger Funktionsweise möglichst vielseitig einsetzbar ist.

Die Lösung dieser Aufgabe erfolgt durch die Merkmale des Anspruchs 1 und insbesondere dadurch, daß ein Getriebe zwischen dem Antrieb und dem Aufroller sowie ein Schalter vorgesehen sind, wobei mit dem Schalter ausgehend von einem Freilaufmodus verschiedene Getriebekonfigurationen einstellbar sind, von denen eine einen Komfortmodus mit in Abwickelrichtung angetriebenem Aufroller und eine andere einem Straffermodus mit in Aufwickelrichtung angetriebenem Aufroller entspricht, und wobei der Schalter mittels des Antriebs betätigbar ist.

Die erfindungsgemäße Sicherheitsgurtvorrichtung kann in drei Betriebsmodi betrieben werden, und zwar ausgehend von dem Freilaufmodus wahlweise entweder im Komfortmodus oder im Straffermodus. Der Freilaufmodus ermöglicht eine normale Benutzung des Sicherheitsgurtes im Normalbetrieb des Fahrzeugs, in dem der Aufroller frei drehbar ist. Handelt es sich bei dem Antriebsmodus um den Komfortmodus, so sorgt der Antrieb für ein automatisches Abwickeln des Gurtes, um dem Fahrzeuginsassen das Ausziehen des Gurtes zu erleichtern oder zu Beginn des Fahrbetriebs den Gurt an den Fahrzeuginsassen heranzureichen. Wenn es sich bei dem Antriebsmodus dagegen um den Straffermodus handelt, dann wird der Gurt mittels des Antriebs auf dem Aufroller aufgewickelt, um z.B. eine Gurtstrafffunktion zu realisieren.

Der Komfortmodus und der Straffermodus können erfindungsgemäß mittels eines Schalters eingestellt werden, der durch den Antrieb betätigbar ist. Mittels des Schalters kann somit eine kraftschlüssige Verbindung zwischen dem Antrieb und dem Aufroller über das Getriebe hergestellt werden. Indem der Schalter mittels des Antriebs betätigt werden kann, sorgt der Antrieb automatisch selbst für die Herstellung der jeweils gewünschten kraftschlüssigen Verbindung.

Erfindungsgemäß können mit dem Schalter verschiedene Getriebekonfigurationen eingestellt werden. Durch entsprechende Betätigung des Schalters kann somit entweder der Komfortmodus oder der Straffermodus ausgewählt werden.

Die Auswahl des jeweiligen Antriebsmodus, d.h. des Komfortmodus oder des Straffermodus, kann vorzugsweise durch die Betriebsweise des Antriebs getroffen werden. Die Unterscheidung zwischen Komfortmodus und Straffermodus kann beispielsweise durch verschiedene Getriebekonfigurationen und verschiedene Antriebsrichtungen des Antriebs erfolgen. Bevorzugt ist es, wenn mittels des Antriebs verschiedene Schalterstellungen realisiert werden können, die verschiedenen Getriebekonfigurationen entsprechen.

Gemäß einer bevorzugten Ausführungsform der Erfindung kann ein Startmoment des Antriebs in eine Schaltbewegung des Schalters umgesetzt werden. Der Schalter kann hierdurch unmittelbar im Anschluß an das Einschalten des im Freilaufmodus ausgeschalteten Antriebs betätigt werden.

Die Erfindung ermöglicht es insbesondere, gezielt verschiedene Übersetzungsverhältnisse einzustellen, wenn gemäß einer bevorzugten Ausführungsform der Erfindung das Übersetzungsverhältnis des Getriebes von der jeweils eingestellten Getriebekonfiguration abhängig ist.

Hierdurch kann beispielsweise für den Straffermodus ein höheres Obersetzungsverhältnis vorgesehen sein als für den Komfortmodus, damit bei einer unfallbedingten Gurtstraffung der Gurt schneller aufgewickelt wird als er im Komfortmodus abgewickelt wird. Vorteilhaft ist hierbei insbesondere, daß eine einzige Antriebsgeschwindigkeit des Antriebs ausreicht, um verschiedene Drehgeschwindigkeiten des Aufrollers zu erzielen. Beispielsweise ein Elektromotor des Antriebs kann daher mit lediglich einer einzigen Drehzahl betrieben werden.

Bevorzugt ist es ferner, wenn mittels des Antriebs auswählbare Schalterstellungen von der Antriebsrichtung des Antriebs abhängig sind. Folglich kann durch entsprechende Wahl der Antriebsrichtung gezielt die gewünschte Schalterstellung realisiert und die gewünschte Getriebekonfiguration eingestellt werden.

Bevorzugt ist es ferner, wenn verschiedene Schalterstellungen vom Anlaufverhalten des Antriebs abhängig sind. Durch die Art und Weise, wie sich der Antrieb beim oder unmittelbar nach dem Einschalten verhält, kann hierbei unter den Schalterstellungen gewählt und somit insbesondere gezielt entweder der Komfortmodus oder der Straffermodus eingestellt werden.

In einer besonders bevorzugten praktischen Ausgestaltung der Erfindung umfaßt der Antrieb einen Elektromotor, wobei mittels des Antriebs auswählbare Schalterstellungen von dem Ansteuersignal für den Elektromotor abhängig sind.

Die zur Auswahl der jeweils gewünschten Schalterstellung gezielt veränderbare Charakteristik des Ansteuersignals kann beispielsweise das Vorzeichen des Ansteuersignals sein. Es kann somit durch Umpolen des Elektromotors die Antriebsrichtung gewechselt und auf diese Weise unter von der Antriebsrichtung abhängigen Schalterstellungen ausgewählt werden.

Gemäß einem weiteren bevorzugten Ausführungsbeispiel der Erfindung ist eine insbesondere dem Komfortmodus entsprechende Getriebekonfiguration einstellbar, in der das Übersetzungsverhältnis des Getriebes 1 : 1 beträgt.

In einer derartigen Getriebekonfiguration ist das insgesamt zwischen dem Antrieb und dem Aufroller wirksame Übersetzungsverhältnis durch das Übersetzungsverhältnis allein des Antriebs bestimmt. Wenn gemäß einer bevorzugten Variante der Erfindung der Antrieb einen motorgetriebenen Riementrieb umfaßt, dann kann in dieser Getriebekonfiguration das Gesamt-Übersetzungsverhältnis durch die Auslegung des Riementriebs vorgegeben werden.

Eine bevorzugte praktische Ausgestaltung der Erfindung schlägt vor, den Antrieb und das Getriebe zum Einstellen einer insbesondere dem Komfortmodus entsprechenden Getriebekonfiguration durch den Schalter miteinander zu koppeln.

Bei durch den Schalter mit dem Antrieb gekoppelten Getriebe ist der Schalter vorzugsweise ein Bestandteil der kraftschlüssigen Verbindung zwischen dem Antrieb und dem Getriebe. Bevorzugt wird hierbei von Teilen des Antriebs, des Getriebes und des Schalters ein Zahnrad- oder Reibradgetriebe gebildet.

Bei dem mit dem Antrieb koppelbaren Getriebeteil handelt es sich vorzugsweise um ein den Freilaufmodus ermöglichendes Freilaufteil des Getriebes. Das Getriebe umfaßt vorzugsweise ein Planetengetriebe, wobei ein Hohlrad des Planetengetriebes als ein Freilaufteil des Getriebes vorgesehen ist.

Ein Übersetzungsverhältnis von 1 : 1 des Getriebes kann in einer bevorzugten Variante der Erfindung dadurch eingestellt werden, daß ein Hohlrad des Planetengetriebes mit einem Antriebsteil des Antriebs, das drehfest mit einem Sonnenrad des Planetengetriebes verbunden ist, derart gekoppelt wird, daß das Hohlrad und das Sonnenrad synchron rotieren. Durch eine derartige Synchronisation von Antrieb und Getriebe mittels des Schalters kann erreicht werden, daß sich das Hohlrad mit der gleichen Geschwindigkeit dreht wie das Antriebsteil und somit wie das Sonnenrad. Der in der bevorzugten Variante der Erfindung mit den Achsen von Planetenrädern gekoppelte und als Planetenradträger ausgebildete Aufroller dreht sich dann ebenfalls mit dieser durch den Antrieb vorgegebenen Geschwindigkeit.

Gemäß einer weiteren bevorzugten Ausführungsform der Erfindung wird vorgeschlagen, daß nach Betätigung des Schalters ein Freilaufteil des Getriebes, insbesondere ein Hohlrad eines Planetengetriebes, durch den Schalter entweder festgehalten oder mit dem Antrieb gekoppelt ist. Es kann somit in Abhängigkeit von der Schalterstellung auf unterschiedliche Weise in das Getriebe eingegriffen werden.

Des weiteren ist bevorzugt vorgesehen, daß wenigstens ein Getriebeteil insbesondere an seinem Außenumfang zumindest zwei unterschiedlich ausgebildete Eingriffsbereiche für den Schalter aufweist, die vorzugsweise axial beabstandet sind. In diese Eingriffsbereiche kann der Schalter mit entsprechend ausgebildeten Eingriffsabschnitten eingreifen, um die jeweilige Getriebekonfiguration einzustellen.

Vorzugsweise ist ein Eingriffsabschnitt des Schalters zum Festhalten eines Freilaufteils des Getriebes und ein anderer Eingriffsabschnitt des Schalters zur Koppelung des Freilaufteils mit dem Antrieb ausgebildet. Der Schalter weist somit einen Halteabschnitt und einen Kopplungsabschnitt auf. Die beiden Eingriffsabschnitte des Schalters können unterschiedlich ausgebildet und an entsprechende Eingriffsbereiche des Getriebes angepaßt sein.

Bevorzugt ist ferner vorgesehen, daß ein Kopplungsabschnitt des Schalters ein Zahnrad- oder Reibradgetriebe umfaßt, dessen Übersetzungsverhältnis vorzugsweise 1 : 1 beträgt. In der bevorzugten Ausgestaltung umfaßt der Kopplungsabschnitt zwei drehfest miteinander verbundene Zahn-oder Reibräder. Es kann auch eine einzige Zahn- oder Reibwalze vorgesehen sein.

Weitere Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:

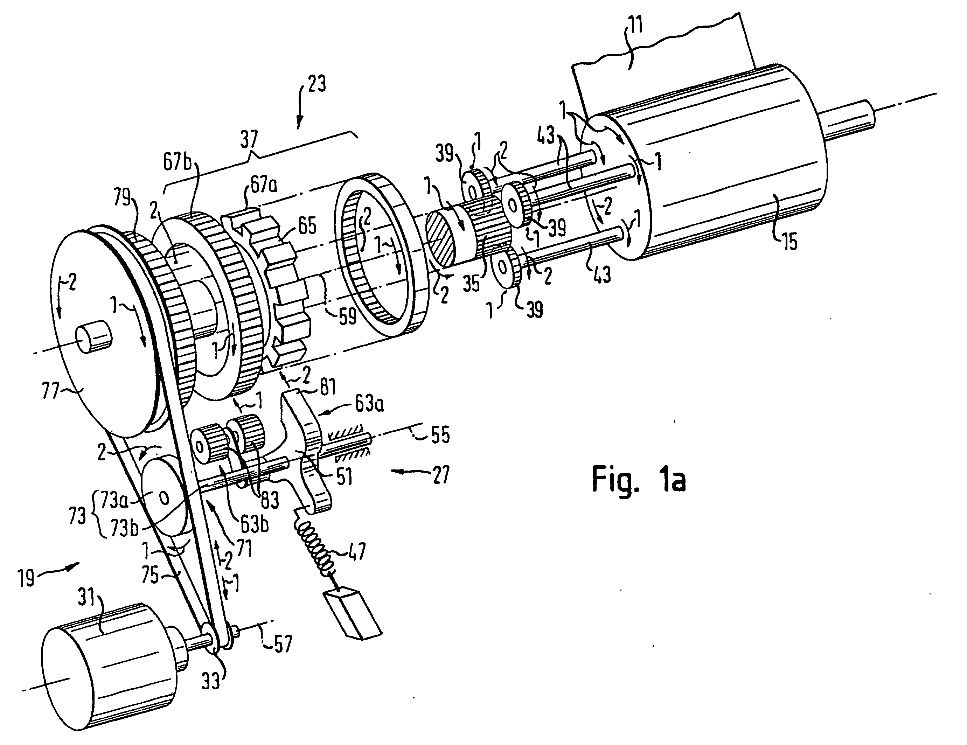

- Fig. 1a: eine perspektivische Darstellung einer Sicherheitsgurtvorrichtung gemäß einer Ausführungsform der Erfindung, und

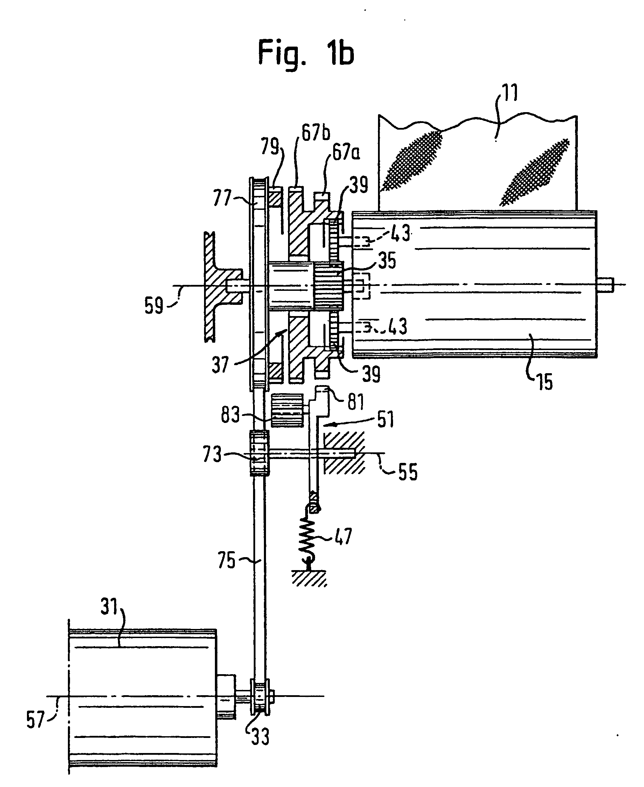

- Fig. 1b: die Sicherheitsgurtvorrichtung von Fig. 1a in einer Seitenansicht.

Die in Fig. 1a und 1b dargestellte erfindungsgemäße Sicherheitsgurtvorrichtung umfaßt einen Antrieb 19, der von einem Elektromotor 31 mit einer Antriebswelle 33 und einem Riementrieb mit einem Antriebsriemen 75 und einer Riemenscheibe 77 gebildet ist. Der Antriebsriemen 75 ist vorzugsweise als Zahnriemen ausgebildet.

Mittels des Antriebs 19 ist ein Gurtaufroller 15 wahlweise in einer Abwikkelrichtung 1 oder einer Aufwickelrichtung 2 antreibbar, um einen Sicherheitsgurt 11 entweder in einem Komfortmodus abzuwickeln oder in einem Straffermodus aufzuwickeln.

Zwischen der Riemenscheibe 77 und dem Aufroller 15 ist ein Planetengetriebe 23 vorgesehen. Der Antrieb 19 ist insofern ein Bestandteil des Getriebes 23, als die Nabe der Riemenscheibe 77 als Sonnenrad 35 des Planetengetriebes ausgebildet ist (vgl. Fig. 1b). Die Riemenscheibe 77 kann auch als Antriebsscheibe oder Antriebsrad bezeichnet werden.

Die Drehachse des Aufrollers 15 fällt mit der zentralen Drehachse 59 des Getriebes 23 und des Antriebsrades 77 zusammen und verläuft parallel versetzt zur Antriebsachse 57 des Motors 31.

Der Aufroller 15 dient als Planetenradträger und ist mit den Achsen 43 der Planetenräder 39 des Getriebes 23 gekoppelt. Das Hohlrad 37 des Getriebes 23 dient als ein Freilaufteil des Getriebes 23, das bei ausgeschaltetem Antrieb 19 gemeinsam mit dem Aufroller 15 relativ zu dem Sonnenrad 35 drehbar ist. Das Hohlrad 37 ermöglicht so einen Freilaufmodus der Vorrichtung.

Verschiedene Konfigurationen des Getriebes 23, in denen bei eingeschaltetem Antrieb 19 der Aufroller 15 entweder im Komfortmodus oder im Straffermodus angetrieben werden kann, sind mittels eines Schalters 27 einstellbar. Der Schalter 27 umfaßt einen schwenkbar gelagerten Schalthebel 51. Die Schwenkachse 55 des Schalthebels 51 verläuft parallel zur zentralen Drehachse 59.

Der mehrarmig ausgebildete Schalthebel 51 ist mittels einer Rückstellfeder 47 bei ausgeschaltetem Antrieb 19 in einer dem Freilaufmodus entsprechenden Neutral- oder Freilaufstellung gehalten, in der sich der Schalthebel 51 außer Eingriff mit dem Getriebe 23 befindet.

Der Schalthebel 51 ist über eine Betätigungseinheit 71 ansteuerbar, die eine Viskosekupplung 73 umfaßt. Die Viskosekupplung 73 weist ein mittels des Antriebsriemens 75 drehbares Antriebsrad 73a und eine Betätigungswelle 73b auf, die mit dem Schalthebel 51 verbunden ist. Über das viskose Medium der Kupplung 73 besteht somit eine kraftschlüssige Verbindung zwischen der Antriebswelle 33 des Motors 31 und dem Schalthebel 51.

Der mit dem Getriebe 23 zusammenwirkende Teil des Schalthebels 51 ist bügelförmig ausgebildet und umfaßt zwei Hebelarme, deren freien Enden als Eingriffsabschnitte 63a, 63b ausgebildet sind. Mit den Eingriffsabschnitten 63a, 63b kann der Schalthebel 51 durch Verschwenken aus der Freilaufstellung in axial beabstandete Eingriffsbereiche 67a, 67b eingreifen, die am Außenumfang des Hohlrades 37 ausgebildet sind.

Ein Haltebereich 67a, über den das Hohlrad 37 mittels des Schalthebels 51 an einer Drehbewegung gehindert werden kann, umfaßt eine Vielzahl von in Umfangsrichtung verteilt angeordneten Halteaufnahmen 65, die jeweils von radial abstehenden Vorsprüngen des Haltebereiches 67a begrenzt sind. Ein auf der der Riemenscheibe 77 zugewandten Seite des Haltebereiches 67a gelegener Kopplungsbereich 67b umfaßt eine Verzahnung, so daß in diesem Bereich das Hohlrad 37 als Zahnrad ausgebildet ist.

Ein am Außenumfang der Riemenscheibe 77 axial neben dem Riemenbereich ausgebildeter Eingriffsbereich 79 für den Schalthebel 51 umfaßt ebenfalls eine Verzahnung.

Die Eingriffsabschnitte 63a, 63b des Schalthebels 51 sind an die unterschiedlich ausgebildeten Eingriffsbereiche 67a, 67b des Hohlrades 37 angepaßt. Ein Halteabschnitt 63a ist in die Halteaufnahmen 65 einsteuerbar, um das Hohlrad 37 festzuhalten, während mit einem Kopplungsabschnitt 63b eine kraftschlüssige Verbindung zwischen der Riemenscheibe 77 und dem Hohlrad 37 herstellbar ist.

Während der Halteabschnitt 63a einen Haltezahn 81 umfaßt, weist der Kopplungsabschnitt 63b zwei am Schalthebel 51 drehbar gelagerte und drehfest miteinander verbundene Kopplungszahnräder 83 auf. Anstelle der Zahnräder 83 können auch Reibräder verwendet werden, die dann mit als Reibflächen ausgebildeten Eingriffsbereichen der Riemenscheibe 77 bzw. des Hohlrades 37 zusammenwirken. Es ist auch möglich, anstelle zweier separater Räder 83 ein einziges, z.B. walzenförmiges Zahnrad oder Reibrad vorzusehen, dessen axiale Länge derart bemessen ist, daß es den axialen Abstand zwischen den Eingriffsbereichen 79, 67b überbrücken kann.

Im Freilaufmodus befindet sich der Schalthebel 51 in der Neutralstellung. Der Aufroller 15 ist in beide Richtungen frei drehbar, da sich das als Freilaufteil des Getriebes 23 dienende Hohlrad 37, das durch die sich auf dem Sonnenrad 35 abrollenden Planetenräder 39 in Drehung versetzt wird, ebenfalls frei drehen kann.

Um ausgehend vom Freilaufmodus den Komfortmodus einzustellen, wird der Motor 31 eingeschaltet, wobei die Polarität derart gewählt ist, daß sich die Antriebswelle 33 in Richtung des Pfeils 1 dreht. Der Antriebsriemen 75 dreht nicht nur die Riemenscheibe 77, sondern außerdem das Antriebsrad 73a der Viskosekupplung 73, deren Antriebswelle 73b daraufhin den Schalthebel 51 gegen die Kraft der Rückstellfeder 47 in die entsprechende Richtung verschwenkt.

Hierdurch werden die Riemenscheibe 77 und das Hohlrad 37 über den von den Zahnrädern 83 gebildeten Kopplungsabschnitt 63b des Schalthebels 51 miteinander gekoppelt. Das Übersetzungsverhältnis des auf diese Weise gebildeten Zahnradgetriebes beträgt 1 : 1, so daß sich das mittels der Riemenscheibe 77 über den Schalthebel 51 in Drehung versetzte Hohlrad 37 mit der gleichen Geschwindigkeit dreht wie die Riemenscheibe 77 und somit wie das von der Nabe der Riemenscheibe 77 gebildete Sonnenrad 35.

Aufgrund dieser Synchronisation erfolgt keine Relativdrehung zwischen dem Hohlrad 37 und dem Sonnenrad 35, so daß sich die Planetenräder 39 um die zentrale Drehachse 59 drehen, ohne sich jeweils um die eigene Achse 43 zu drehen.

Der Aufroller 15 wird folglich durch diese Umlaufbewegung der Planetenräder 39 mit der durch die Riemenscheibe 77 vorgegebenen Geschwindigkeit in Abwickelrichtung 1 gedreht.

Die Abwickelgeschwindigkeit des Aufrollers 15 im Komfortmodus ist durch das Übersetzungsverhältnis des Antriebs 19 vorgegeben, da aufgrund der synchronisierenden Kopplung zwischen dem Antrieb 19 und dem Getriebe 23 durch den Schalter 27 eine Getriebekonfiguration mit einem Übersetzungsverhältnis von 1 : 1 eingestellt ist.

Vorzugsweise beträgt das Übersetzungsverhältnis des Riementriebs des Antriebs 19 etwa 7 : 1, so daß im Komfortmodus insgesamt ein Übersetzungsverhältnis von 7 : 1 zwischen der Antriebswelle 33 des Motors 31 und dem Aufroller 15 eingestellt ist.

Der Straffermodus unterscheidet sich von dem Komfortmodus dadurch, daß der Elektromotor 31 mit umgekehrter Polarität betrieben wird und sich die Antriebswelle 33 somit in Richtung des Pfeils 2 dreht. Die Betätigungseinheit 71 ist in beiden Richtungen wirksam, so daß im Straffermodus der Schalthebel 51 nach dem Einschalten des Motors 31 in die andere Richtung verschwenkt wird und der andere Eingriffsabschnitt 63a mit dem Haltebereich 67a des Hohlrades 37 zusammenwirkt, um das Hohlrad 37 festzuhalten.

Folglich gelangt der Haltezahn 81 in Eingriff mit einer der Halteaufnahmen 65, wodurch das Hohlrad 37 an einer Drehung gehindert ist. Die Planetenräder 39 werden durch das Sonnenrad 35 zu einer gleichsinnigen Umlaufbewegung um die zentrale Drehachse 59 angetrieben, so daß sich der Aufroller 15 wiederum in die gleiche Richtung dreht wie die Riemenscheibe 77, aufgrund der umgekehrten Polarität des Motors 31 nunmehr jedoch in Aufwickelrichtung 2.

Durch das Festhalten des Hohlrades 37 ist im Straffermodus das Übersetzungsverhältnis des Planetengetriebes wirksam, das vorzugsweise etwa 3,6 : 1 beträgt. Zusammen mit dem Übersetzungsverhältnis des Antriebs 19 von etwa 7 : 1 ergibt dies insgesamt zwischen der Antriebswelle 33 des Motors 31 und dem Aufroller 15 ein Übersetzungsverhältnis von etwa 25 : 1.

Bei gleicher Geschwindigkeit der Antriebswelle 33 wird der Gurt 11 im Straffermodus also wesentlich schneller aufgewickelt, als er im Komfortmodus abgewickelt wird. Die Drehgeschwindigkeiten der Antriebswelle 33 im Komfortmodus einerseits und im Straffermodus andererseits können jedoch auch verschieden sein.

### Bezugszeichenliste

- 1: Abwickelrichtung, Komfortmodus
- 2: Aufwickelrichtung, Straffermodus
- 11: Sicherheitsgurt
- 15: Gurtaufroller
- 19: Antrieb
- 23: Getriebe
- 27: Schalter
- 31: Elektromotor
- 33: Antriebswelle
- 35: Sonnenrad
- 37: Freilaufteil, Hohlrad
- 39: Planetenrad
- 43: Achse eines Planetenrades
- 47: Rückstellfeder
- 51: Schalthebel
- 55: Schwenkachse des Schalthebels
- 57: Antriebsachse des Motors
- 59: zentrale Drehachse
- 63a, 63b: Eingriffsabschnitt
- 65: Halteaufnahme
- 67a, 67b: Eingriffsbereich
- 71: Betätigungseinheit
- 73: Viskosekupplung
- 73a: Antriebsrad
- 73b: Antriebswelle
- 75: Antriebsriemen
- 77: Riemenscheibe, Antriebsrad
- 79: Eingriffsbereich
- 81: Haltezahn
- 83: Kopplungszahnrad

## Patentansprüche

1. Sicherheitsgurtvorrichtung für Kraftfahrzeuge mit
- einem Sicherheitsgurt (11),
- einem Gurtaufroller (15),
- einem Antrieb (19) für den Aufroller (15),
- einem Getriebe (23) zwischen dem Antrieb (19) und dem Aufroller (15), und
- einem Schalter (27),
wobei mit dem Schalter (27) ausgehend von einem Freilaufmodus verschiedene Getriebekonfigurationen einstellbar sind, von denen eine einem Komfortmodus mit in Abwickelrichtung (1) angetriebenem Aufroller (15) und eine andere einem Straffermodus mit in Aufwickelrichtung (2) angetriebenem Aufroller (15) entspricht, und
wobei der Schalter (27) mittels des Antriebs (19) betätigbar ist.

2. Vorrichtung nach Anspruch 1,
**dadurch gekennzeichnet,**
**daß** mittels des Schalters (27) einstellbare Getriebekonfigurationen von der Schalterstellung abhängig sind.

3. Vorrichtung nach Anspruch 1 oder 2,
**dadurch gekennzeichnet,**
**daß** das Übersetzungsverhältnis des Getriebes (23) von der jeweils eingestellten Getriebekonfiguration abhängig ist.

4. Vorrichtung nach einem der vorhergehenden Ansprüche,
**dadurch gekennzeichnet,**
**daß** mittels des Antriebs (19) auswählbare Schalterstellungen von der Antriebsrichtung des Antriebs (19) abhängig sind.

5. Vorrichtung nach einem der vorhergehenden Ansprüche,
**dadurch gekennzeichnet,**
**daß** eine insbesondere dem Komfortmodus entsprechende Getriebekonfiguration einstellbar ist, in der das Übersetzungsverhältnis des Getriebes (23) 1:1 beträgt.

6. Vorrichtung nach einem der vorhergehenden Ansprüche,
**dadurch gekennzeichnet,**
**daß** der Antrieb (19) und das Getriebe (23) zum Einstellen einer insbesondere dem Komfortmodus entsprechenden Getriebekonfiguration durch den Schalter (27) miteinander koppelbar sind.

7. Vorrichtung nach einem der vorhergehenden Ansprüche,
**dadurch gekennzeichnet,**
**daß** der Antrieb (19) und das Getriebe (23) durch den Schalter (27) synchronisierbar sind.

8. Vorrichtung nach einem der vorhergehenden Ansprüche,
**dadurch gekennzeichnet,**
**daß** das Getriebe (23) ein Planetengetriebe umfaßt, wobei ein Hohlrad (37) und ein Sonnenrad (35) des Planetengetriebes durch den Schalter (27) miteinander koppelbar sind, bevorzugt derart, daß das Hohlrad (37) und das Sonnenrad (35) synchron rotieren.

9. Vorrichtung nach einem der vorhergehenden Ansprüche,
**dadurch gekennzeichnet,**
**daß** bei durch den Schalter (27) mit dem Antrieb (19) gekoppeltem Getriebe (23) der Schalter (27) ein Bestandteil der kraftschlüssigen Verbindung zwischen dem Antrieb (19) und dem Getriebe (23) ist.

10. Vorrichtung nach einem der vorhergehenden Ansprüche,
**dadurch gekennzeichnet,**
**daß** bei durch den Schalter (27) mit dem Antrieb (19) gekoppeltem Getriebe (23) von Teilen (77, 37, 83) des Antriebs (19), des Getriebes (23) und des Schalters (27) ein Zahnrad- oder Reibradgetriebe gebildet ist.

11. Vorrichtung nach einem der vorhergehenden Ansprüche,
**dadurch gekennzeichnet,**
**daß** ein den Freilaufmodus ermöglichendes Freilaufteil (37) des Getriebes (23) mit dem Antrieb (19) koppelbar ist.

12. Vorrichtung nach einem der vorhergehenden Ansprüche,
**dadurch gekennzeichnet,**
**daß** das Getriebe (23) ein Planetengetriebe umfaßt, wobei ein Hohlrad (37) des Planetengetriebes als ein Freilaufteil des Getriebes (23) vorgesehen ist.

13. Vorrichtung nach einem der vorhergehenden Ansprüche,
**dadurch gekennzeichnet,**
**daß** nach Betätigung des Schalters (27) in Abhängigkeit von der Schalterstellung ein Freilaufteil (37) des Getriebes (23) durch den Schalter (27) entweder festgehalten oder mit dem Antrieb (19) gekoppelt ist.

14. Vorrichtung nach einem der vorhergehenden Ansprüche,
**dadurch gekennzeichnet,**
**daß** wenigstens ein Getriebeteil (37) insbesondere an seinem Außenumfang zumindest zwei unterschiedlich ausgebildete Eingriffsbereiche (67a, 67b) für den Schalter (27) aufweist.

15. Vorrichtung nach einem der vorhergehenden Ansprüche,
**dadurch gekennzeichnet,**
**daß** Eingriffsbereiche (67a, 67b) eines Getriebeteils (37) axial beabstandet sind.

16. Vorrichtung nach einem der vorhergehenden Ansprüche,
**dadurch gekennzeichnet,**
**daß** ein zur Koppelung mit dem Antrieb (19) vorgesehener Eingriffsbereich (67b) eines Getriebeteils (37) als Verzahnung ausgebildet ist.

17. Vorrichtung nach einem der vorhergehenden Ansprüche,
**dadurch gekennzeichnet,**
**daß** wenigstens ein Antriebsteil (77) des Antriebs (19) insbesondere an seinem Außenumfang zumindest einen Eingriffsbereich (79) für den Schalter (27) aufweist.

18. Vorrichtung nach einem der vorhergehenden Ansprüche,
**dadurch gekennzeichnet,**
**daß** ein Eingriffsbereich (79) eines Antriebsteils (77) als Verzahnung ausgebildet ist.

19. Vorrichtung nach einem der vorhergehenden Ansprüche,
**dadurch gekennzeichnet,**
**daß** ein mit dem Schalter (27) in Eingriff bringbares Antriebsteil (77) des Antriebs (19) eine Riemenscheibe (77) eines Riementriebs umfaßt.

20. Vorrichtung nach einem der vorhergehenden Ansprüche,
**dadurch gekennzeichnet,**
**daß** der Schalter (27) wenigstens zwei unterschiedlich ausgebildete Eingriffsabschnitte (63a, 63b) aufweist, die durch Betätigen des Schalters (27) in Eingriff mit dem Getriebe (23) steuerbar sind.

21. Vorrichtung nach einem der vorhergehenden Ansprüche,
**dadurch gekennzeichnet,**
**daß** ein Eingriffsabschnitt (63a) des Schalters (27) zum Festhalten eines Freilaufteils (37) des Getriebes (23) und ein anderer Eingriffsabschnitt (63b) des Schalters (27) zur Koppelung des Freilaufteils (37) mit dem Antrieb (19) ausgebildet ist.

22. Vorrichtung nach einem der vorhergehenden Ansprüche,
**dadurch gekennzeichnet,**
**daß** ein Kopplungsabschnitt (63b) des Schalters (27) ein Zahnrad-oder Reibradgetriebe (83) umfaßt, dessen Übersetzungsverhältnis vorzugsweise 1:1 beträgt.

23. Vorrichtung nach einem der vorhergehenden Ansprüche,
**dadurch gekennzeichnet,**
**daß** ein Kopplungsabschnitt (63b) des Schalters (27) zwei drehfest miteinander verbundene Zahn- oder Reibräder (83) umfaßt.

## Claims

1. Safety belt device for motor vehicles, comprising
- a safety belt (11),
- a belt retractor (15),
- a drive (19) for the retractor (15),
- gearing (23) between the drive (19) and the retractor (15), and
- a switch (27),
it being possible for various gearing configurations to be set with the switch (27) starting from a freewheel mode, of which gearing configurations one corresponds to a comfort mode with retractor (15) driven in unwinding direction (1) and another corresponds to a tensioning mode with retractor (15) driven in winding-up direction (2), and it being possible for the switch (27) to be actuated by means of the drive (19).

2. Device according to Claim 1, **characterized in that** gearing configurations which can be set by means of the switch (27) depend on the switch position.

3. Device according to Claim 1 or 2, **characterized in that** the transmission ratio of the gearing (23) depends on the respectively set gearing configuration.

4. Device according to one of the preceding claims, **characterized in that** switch positions which can be selected by means of the drive (19) depend on the drive direction of the drive (19).

5. Device according to one of the preceding claims, **characterized in that** a gearing configuration corresponding in particular to the comfort mode can be set in which the transmission ratio of the gearing (23) is 1:1.

6. Device according to one of the preceding claims, **characterized in that** the drive (19) and the gearing (23) can be coupled to one another by the switch (27) for setting a gearing configuration corresponding in particular to the comfort mode.

7. Device according to one of the preceding claims, **characterized in that** the drive (19) and the gearing (23) can be synchronized by the switch (27).

8. Device according to one of the preceding claims, **characterized in that** the gearing (23) comprises epicyclic gearing, it being possible for a ring gear (37) and a sun gear (35) of the epicyclic gearing to be coupled to one another by the switch (27) preferably in such a way that the ring gear (37) and the sun gear (35) rotate synchronously.

9. Device according to one of the preceding claims, **characterized in that**, when gearing (23) is coupled to the drive (19) by the switch (27), the switch (27) is an integral part of the frictional connection between the drive (19) and the gearing (23).

10. Device according to one of the preceding claims, **characterized in that**, when gearing (23) is coupled to the drive (19) by the switch (27), toothed or friction gearing is formed by parts (77, 37, 83) of the drive (19), of the gearing (23) and of the switch (27).

11. Device according to one of the preceding claims, **characterized in that** a freewheel part (37), permitting the freewheel mode, of the gearing (23) can be coupled to the drive (19).

12. Device according to one of the preceding claims, **characterized in that** the gearing (23) comprises epicyclic gearing, a ring gear (37) of the epicyclic gearing being provided as a freewheel part of the gearing (23).

13. Device according to one of the preceding claims, **characterized in that**, after actuation of the switch (27), depending on the switch position, a freewheel part (37) of the gearing (23) is either arrested by the switch (27) or is coupled to the drive (19).

14. Device according to one of the preceding claims, **characterized in that** at least one gearing part (37), in particular at its outer periphery, has at least two engagement regions (67a, 67b) of different design for the switch (27).

15. Device according to one of the preceding claims, **characterized in that** the engagement regions (67a, 67b) of a gearing part (37) are spaced apart axially.

16. Device according to one of the preceding claims, **characterized in that** one engagement region (67b) of a gearing part (37) intended for coupling to the drive (19) is designed as a tooth system.

17. Device according to one of the preceding claims, **characterized in that** at least one drive part (77) of the drive (19), in particular at its outer periphery, has at least one engagement region (79) for the switch (27).

18. Device according to one of the preceding claims, **characterized in that** an engagement region (79) of a drive part (77) is designed as a tooth system.

19. Device according to one of the preceding claims, **characterized in that** a drive part (77) of the drive (19) which can be brought into engagement with the switch (27) comprises a belt pulley (77) of a belt drive.

20. Device according to one of the preceding claims, **characterized in that** the switch (27) has at least two engagement sections (63a, 63b) of different design which can be brought into engagement with the gearing (23) in a controlled manner by actuating the switch (27).

21. Device according to one of the preceding claims, **characterized in that** one engagement section (63a) of the switch (27) is designed for arresting a freewheel part (37) of the gearing (23), and another engagement section (63b) of the switch (27) is designed for coupling the freewheel part (37) to the drive (19).

22. Device according to one of the preceding claims, **characterized in that** one coupling section (63b) of the switch (27) comprises toothed or friction gearing (83), the transmission ratio of which is preferably 1:1.

23. Device according to one of the preceding claims, **characterized in that** one coupling section (63b) of the switch (27) comprises two gear or friction wheels (83) coupled to one another in a rotationally fixed manner.

## Revendications

1. Dispositif de ceinture de sécurité pour véhicules automobiles, comprenant :
- une ceinture de sécurité (11),
- un enrouleur de ceinture (15),
- un entraînement (19) pour l'enrouleur (15),
- une transmission (23) entre l'entraînement (19) et l'enrouleur (15), et
- un commutateur (27),
dans lequel, au moyen du commutateur (27), il est possible d'établir différentes configurations de transmission à partir du mode de course libre, dont l'une correspond à un mode de confort avec l'enrouleur (15) entraîné dans la direction de déroulement (1) et une autre configuration correspond à un mode de tensionnement avec l'enrouleur (15) entraîné dans la direction d'enroulement (2), le commutateur (27) étant actionnable au moyen de l'entraînement (19).

2. Dispositif selon la revendication 1, **caractérisé en ce que** les configurations de transmission établies au moyen du commutateur (27) dépendent de la position du commutateur.

3. Dispositif selon l'une ou l'autre des revendications 1 et 2, **caractérisé en ce que** le rapport de multiplication de la transmission (23) dépend de la configuration de transmission respective établie.

4. Dispositif selon l'une des revendications précédentes, **caractérisé en ce que** des positions du commutateur sélectionnables au moyen de l'entraînement (19) dépendent de la direction d'entraînement de l'entraînement (19).

5. Dispositif selon l'une des revendications précédentes, **caractérisé en ce qu'**il est possible d'établir une configuration de transmission correspondant en particulier au mode de confort, dans laquelle le rapport de multiplication de la transmission (23) est de 1 : 1.

6. Dispositif selon l'une des revendications précédentes, **caractérisé en ce que** l'entraînement (19) et la transmission (23) sont susceptibles d'être couplés l'un à l'autre par le commutateur (27) pour établir une configuration de transmission correspondant en particulier au mode de confort.

7. Dispositif selon l'une des revendications précédentes, **caractérisé en ce que** l'entraînement (19) et la transmission (23) peuvent être synchronisés par le commutateur (27).

8. Dispositif selon l'une des revendications précédentes, **caractérisé en ce que** la transmission (23) comprend une transmission planétaire, une couronne creuse (37) et une roue solaire (35) de la transmission planétaire pouvant être couplées l'une à l'autre par le commutateur (27), de préférence de telle sorte que la couronne creuse (37) et la roue solaire (35) tournent de façon synchrone.

9. Dispositif selon l'une des revendications précédentes, **caractérisé en ce que** dans l'état couplé de la transmission (23) avec l'entraînement (19) par le commutateur (27), le commutateur (27) fait partie de la liaison en coopération de forces entre l'entraînement (19) et la transmission (23).

10. Dispositif selon l'une des revendications précédentes, **caractérisé en ce que** dans l'état couplé de la transmission (23) avec l'entraînement (19) par le commutateur (27), une transmission à engrenages ou à galets de friction est formée par des parties (77, 37, 83) de l'entraînement (19), de la transmission (23) et du commutateur (27).

11. Dispositif selon l'une des revendications précédentes, **caractérisé en ce qu'**une pièce de course libre (37) de la transmission (23), laquelle permet le mode de course libre est susceptible d'être couplée à l'entraînement (19).

12. Dispositif selon l'une des revendications précédentes, **caractérisé en ce que** la transmission (23) comprend une transmission planétaire, une couronne creuse (37) de la transmission planétaire étant prévue comme pièce de course libre de la transmission (23).

13. Dispositif selon l'une des revendications précédentes, **caractérisé en ce qu'**après actionnement du commutateur (27), une pièce de course libre (37) de la transmission (23) est soit retenue par le commutateur (27) soit couplée à l'entraînement (19), en fonction de la position du commutateur.

14. Dispositif selon l'une des revendications précédentes, **caractérisé en ce qu'**au moins une partie de transmission (37) comprend en particulier à sa périphérie extérieure au moins deux zones d'engagement (67a, 67b) pour le commutateur (27) réalisées différemment.

15. Dispositif selon l'une des revendications précédentes, **caractérisé en ce que** des zones d'engagement (67a, 67b) d'une partie de transmission (37) sont axialement écartées l'une de l'autre.

16. Dispositif selon l'une des revendications précédentes, **caractérisé en ce qu'**une zone d'engagement (67b) d'une partie de transmission (37) prévue pour le couplage avec l'entraînement (19) est réalisée sous forme de denture.

17. Dispositif selon l'une des revendications précédentes, **caractérisé en ce qu'**au moins une partie (77) de l'entraînement (19) comprend en particulier à sa périphérie extérieure au moins une zone d'engagement (79) pour le commutateur (27).

18. Dispositif selon l'une des revendications précédentes, **caractérisé en ce qu'**une zone d'engagement (79) d'une partie d'entraînement (77) est réalisée sous forme de denture.

19. Dispositif selon l'une des revendications précédentes, **caractérisé en ce qu'**une partie (77) de l'entraînement (19) susceptible d'être amenée en engagement avec le commutateur (27) comprend une poulie à gorge (77) d'un entraînement à courroie.

20. Dispositif selon l'une des revendications précédentes, **caractérisé en ce que** le commutateur (27) comprend au moins deux tronçons d'engagement (63a, 63b) réalisés différemment, qui peuvent être commandés par actionnement du commutateur (27) en engagement avec la transmission (23).

21. Dispositif selon l'une des revendications précédentes, **caractérisé en ce qu'**il est prévu un tronçon d'engagement (63a) du commutateur (27) destiné à retenir une pièce de course libre (37) de la transmission (23) et un autre tronçon d'engagement (63b) du commutateur (27) destiné à coupler la pièce de course libre (37) avec l'entraînement (19).

22. Dispositif selon l'une des revendications précédentes, **caractérisé en ce qu'**un tronçon de couplage (63b) du commutateur (27) comprend une transmission à engrenages ou à galets de friction (83) dont le rapport de multiplication est de préférence de 1 : 1.

23. Dispositif selon l'une des revendications précédentes, **caractérisé en ce qu'**un tronçon de couplage (63b) du commutateur (27) comprend deux engrenages ou galets de friction (83) reliés solidairement en rotation l'un à l'autre.
